# EUROPÄISCHE PATENTANMELDUNG

(11) **EP 2 299 127 A2**
(43) Veröffentlichungstag der Anmeldung: **23.03.2011**
(21) Anmeldenummer: 10008450.8
(22) Anmeldetag: 13.08.2010
(51) Int. Cl.: F15B 13/08

(54) **I/O Modul mit Anschluss für ein Regelventil**

(30) Priorität: 16.09.2009 DE 102009041857
(71) Anmelder: Robert Bosch GmbH, 70469 Stuttgart (DE)
(72) Erfinder: Inderwies, Thomas, 97833 Frammersbach (DE); Reitzner, Peter, 97782 Gräfendorf (DE)
(74) Vertreter: Thürer, Andreas

(57) **Zusammenfassung**

Die Erfindung betrifft ein I/O Modul (1) als digitales/analoges Interface für ein Ventil (2) mit integrierter Elektronik, mit einer Steckbuchse (7) für den Anschluss eines einzelnen Kombisteckers (3) zur Verbindung des Ventils (2) mit dem einzigen Modul (1), wobei der Kombistecker (3) zumindest einen Kontakt für die Ventilversorgungsspannung, einen Kontakt für den analogen Sollwert und vorzugsweise einen Kontakt für den analogen Istwert beinhaltet.

## Beschreibung

Die vorliegende Erfindung betrifft ein I/O Modul für das Anschließen eines Hydraulik/Pneumatikventils mit integrierter Elektronik an einen digitalen Datenbus gemäß dem Oberbegriff des Patentanspruchs 1.

Gattungsgemäße I/O Module dienen dazu, Ventile eines Hydraulik-/Pneumatikystems an einen Feldbus anzubinden, um digitale Steuer- oder Regelsignale eines Computers in analoge Signale und umgekehrt zu verwandeln und dementsprechend ein Ventil anzusteuern. Ein solches Modul stellt demzufolge für (Regel-)Ventile, welche eine eigene Ventilelektronik besitzen, die Spannungsversorgung sowie analoge Sollwerte (z.B. -10V bis +10V) zur Verfügung.

Aus dem Stand der Technik ist es bekannt, die vorstehend genannten analogen elektrischen Signale über mehrere separate Module oder Geräte bereitzustellen, die zum Einen die benötigte Schaltleistung erzeugen und zum Anderen analoge Eingänge und Ausgänge für den Transfer von Soll- und Istwerten zwischen dem Modul und dem Ventil vorsehen. In der Regel werden heutzutage für den Betrieb beispielsweise eines hydraulischen Stetigventils mit integrierter Elektronik bis zu drei unterschiedliche Module für dessen Ansteuerung gleichzeitig eingesetzt.

Es liegt auf der Hand, dass die Verkabelung der Module recht aufwändig und damit zeitintensiv ist. Darüber hinaus müssen die Spannungsversorgung, Sollwerte und Istwerte der drei unterschiedlichen Module in einem Ventilstecker zusammengeführt werden, was nur mit einem aufwändig gestalteten Sonderkabel vorzugsweise in Form eines Kabelbaums erreicht werden kann.

Angesichts dieses Stands der Technik besteht die Aufgabe der vorliegenden Erfindung darin, die Ansteuerung eines gattungsgemäßen Ventils mit integrierter Elektronik insgesamt zu vereinfachen.

Diese Aufgabe wird durch ein I/O Modul mit den Merkmalen des Patentanspruchs 1 gelöst.

Die Erfindung sieht demzufolge vor, das I/O Modul eines Ventils mit integrierter Elektronik mit einer Steckbuchse für den Anschluss eines einzelnen Kombisteckers zur Verbindung des Ventils mit dem einzigen Modul auszubilden, wobei der Kombistecker zumindest einen Kontakt für die Ventilversorgungsspannung, einen Kontakt für den analogen Sollwert und vorzugsweise einen Kontakt für den analogen Istwert beinhaltet. Durch diese Integration aller Signale, die für die Ansteuerung eines Ventils, vorzugsweise eines Stetigventils mit integrierter Elektronik, notwendig sind (Spannungsversorgung, Sollwertvorgabe, ggf. Rücklesen des Istwerts) über einen einzigen Stecker eines einzelnen Moduls wird der Verkabelungsaufwand für das Ventil mit integrierter Elektronik gegenüber dem Stand der Technik deutlich reduziert. Außerdem wird nur noch ein Modul anstelle mehrerer Module benötigt, wodurch der Materialeinsatz ebenfalls verkleinert wird.

Vorteilhaft ist es, wenn in dem Kombistecker ferner der Kontakt für Erde (0V Anschluss)untergebracht ist.

Schließlich sieht eine vorteilhafte Weiterbildung vor, die Ventilversorgungsspannung schaltbar zu machen.

Weitere vorteilhafte Ausgestaltungen der Erfindung sind Gegenstand der übrigen Unteransprüche.

Die Erfindung wird nachstehend anhand eines bevorzugten Ausführungsbeispiels unter Bezugnahme auf die begleitenden Zeichnungen näher erläutert.

Es zeigen
Fig. 1 die Perspektivenansicht eines I/O Moduls zur Ansteuerung eines Ventils mit integrierter Elektronik gemäß einem bevorzugten Ausführungsbeispiel der Erfindung,
Fig. 2 die systematische Darstellung der gesamten Ansteuerung bestehend aus Modul, Kabel und Ventil gemäß dem bevorzugten Ausführungsbeispiel der Erfindung und
Fig. 3 die Belegung des analogen Ports zum Anschluss des Ventils an das Modul gemäß der Fig. 2.

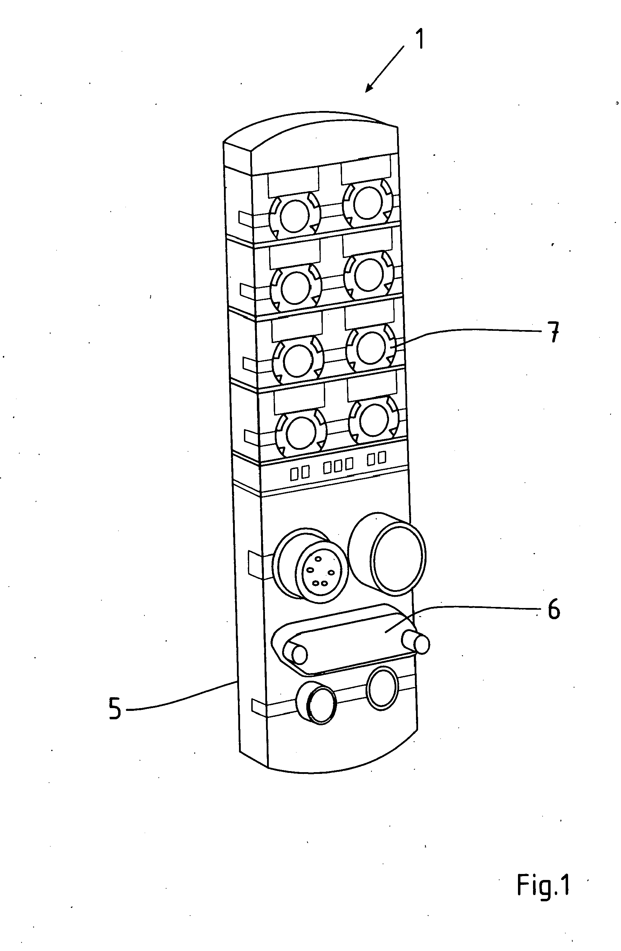

In Fig. 1 ist ein I/O Modul 1 gemäß einem bevorzugten Ausführungsbeispiel der Erfindung gezeigt, welches ein Interface von einem Feldbus (nicht weiter gezeigt) zu einem vorzugsweise als Plug and Play Element ausgebildeten Ventil 2 darstellt, mit einer Versorgungsspannung und einem Soll/Istwert-Umsetzer im Modul 1.

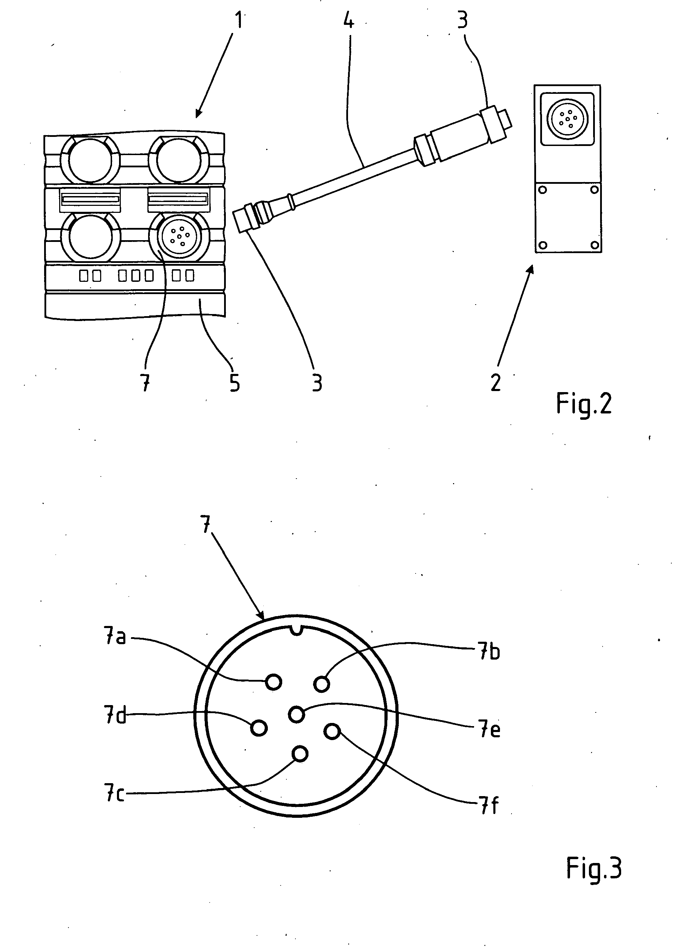

Gemäß der Fig. 2 ist das Ventil 2 über einen einzigen (Analog-) Stecker 3 und folglich über ein einziges Kabel (Kombikabel) 4 am Modul 1 angeschlossen. Das erfindungsgemäße Modul 1 hat demzufolge ein Gehäuse 5 vorzugsweise aus Metall, in dem eine Steckerbuchse 6 mit einer Anzahl digitaler Ports (nicht detailliert dargestellt) für den Anschluss des nicht gezeigten Feldbusses eingesetzt ist. Ferner ist zumindest eine analoge Steckerbuchse 7 zum Anschluss des zumindest einen Ventils 2, vorzugsweise eines Stetigwegeventils mit integrierter Elektronik im Gehäuse 5 untergebracht.

Gemäß der in Fig. 3 gezeigten Steckerbelegung der analogen Steckerbuchse 7 hat diese eine schaltbare Ventilversorgungsspannung (vorzugsweise 24V DC/4A) 7a, eine Erde (0V) 7b, ein erster analoger Ausgang (+/- 10V Sollwert (AO+)) 7c, ein zweiter analoger Ausgang (Bezug Sollwert (AO-)) 7d, ein erster analoger Eingang (+/- 10V Istwert (AI+)) 7e und ein zweiter analoger Eingang (Bezug Istwert (AI-)) 7f.

Wie in Fig. 2 dargestellt ist, wird der Anschluss des Ventils 2 an das Modul 1 mittels des einzigen Kabels 4 vorgenommen, welches über seinen endseitigen analogen Stecker 3 in die analoge Steckerbuchse 7 am Modul 1 eingerastet wird. Demzufolge kann das Kabel am anderen Kabelende mit der integrierten Elektronik des Ventils verlötet oder ebenfalls in eine entsprechend belegte Stecker-/Steckerbuchsenverbindung (wie konkret dargestellt ist) elektrisch verbunden sein.

Grundsätzlich ist jedem Ventil mit integrierter Elektronik ein Modul zugeordnet. Um jedoch den Verkabelungsaufwand bzw. den Materialeinsatz noch weiter zu verkleinern, ist es aber auch möglich, mehrere Ventile einem einzigen Modul zuzuordnen, das demzufolge mehrere analoge Steckerbuchsen (Ports) hat und dessen digitale Steckerbelegung dementsprechend ausgeweitet ist.

### Bezugszeichenliste

| Technische Merkmale | | Bezugszeichen |
|---|---|---|
| Modul | | 1 |
| Ventil | | 2 |
| Analogstecker | | 3 |
| Kombikabel | | 4 |
| Modulgehäuse | | 5 |
| digitale Steckerbuchse | | 6 |
| analoge Steckbuchse | | 7 |
| Ventilversorgungsspannung | | 7a |
| Erde | | 7b |
| | 1. analoger Ausgang | 7c |
| | 2. analoger Ausgang | 7d |
| | 1. analoger Eingang | 7e |
| | 2. analoger Eingang | 7f |

## Patentansprüche

1. I/O Modul (1) eines Ventils (2) mit integrierter Elektronik mit einer analogen Steckerbuchse (7) für den Anschluss eines einzelnen Steckers (3) zur Verbindung des Ventils (1) mit dem Modul (1), **dadurch gekennzeichnet, dass** die Steckerbuchse (7) zumindest einen Kontakt (7a, 7b) für die Ventilversorgungsspannung, einen Kontakt (7c, 7d) für den analogen Sollwert und vorzugsweise einen Kontakt (7e, 7f) für den analogen Istwert beinhaltet.

2. I/O Modul nach Anspruch 1 **dadurch gekennzeichnet, dass** die analoge Steckerbuchse (7) zum Anschluss eines einzelnen Kabels (4) ausgebildet ist.

3. I/O Modul nach einem der vorstehenden Ansprüche **gekennzeichnet durch** eine digitale Steckerbuchse (6) für den Anschluss eines Feldbusses.

4. I/O Modul nach einem der vorstehenden Ansprüche, **gekennzeichnet durch** eine Mehrzahl von analogen Steckerbuchsen für den Anschluss einer Mehrzahl von Ventilen mit integrierter Elektronik an das eine Modul.

5. I/O Modul nach einem der vorstehenden Ansprüche, **dadurch gekennzeichnet, dass** die analoge und digitale Steckerbuchsen in einem Modulgehäuse (5) eingesetzt sind.
